(19)

Europäisches
Patentamt
European
Patent Office
Office européen
des brevets

(11) **EP 4 109 351 A1**

(12) **EUROPEAN PATENT APPLICATION**

(43) Date of publication:
**28.12.2022 Bulletin 2022/52**

(21) Application number: **22161742.6**

(22) Date of filing: **11.03.2022**

(51) International Patent Classification (IPC):
***G06N 3/08*** *(2006.01)*      ***G06N 3/04*** *(2006.01)*
***G06F 30/23*** *(2020.01)*      ***G06F 30/27*** *(2020.01)*

(52) Cooperative Patent Classification (CPC):
**G06N 3/084; G06F 30/23; G06F 30/27;**
G06N 3/0454

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.06.2021   JP 2021104194**

(71) Applicant: **FUJITSU LIMITED**
**Kawasaki-shi, Kanagawa 211-8588 (JP)**

(72) Inventor: **SHIRAHATA, Koichi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFERENCE PROGRAM, INFERENCE METHOD, AND INFORMATION PROCESSING APPARATUS**

(57)      An information processing apparatus (100) infers, by inputting new input data to an approximate model that is obtained by conducting practice by using training data in which a relationship between input data and output data of a numerical simulation is defined, output data that is associated with the new input data. The information processing apparatus (100) determines whether or not accuracy of the inference result obtained from the approximate model satisfies a condition. The information processing apparatus (100) corrects the inference result when the accuracy of the inference result obtained from the approximate model does not satisfies the condition, and outputs the corrected inference result.

FIG.4

EP 4 109 351 A1

**Description**

FIELD

The embodiment discussed herein is related to an inference program, an inference method, and an information processing apparatus.

BACKGROUND

A numerical simulation that conducts numerical analysis performed on a computer by using a mesh obtained by discretizing phenomena of structural mechanics, fluid mechanics, or the like is widely used to design structural objects.

It is possible to reduce design costs or the like by speeding up simulations by causing approximate models, which are obtained by training relationships of input/output data of numerical simulations conducted by using high-performance computing (HPC) on a neural network (NN) or the like, to infer the simulation results.

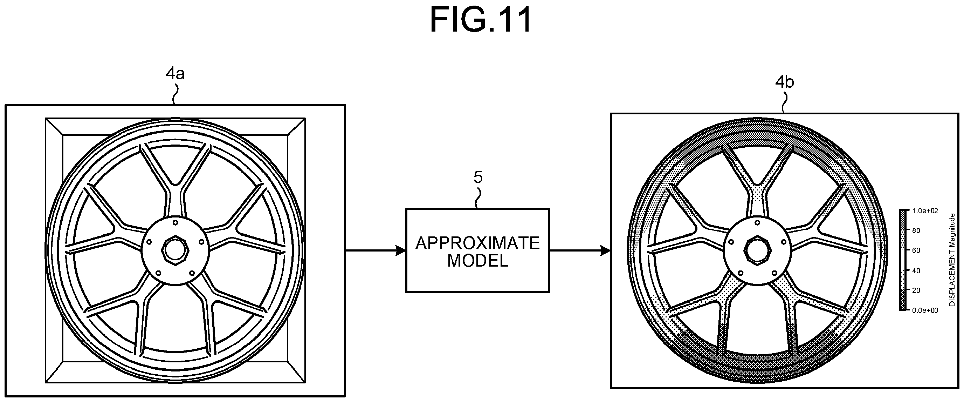

FIG. 11 is a diagram illustrating an example of simulation result estimation obtained from an approximate model. In FIG. 11, an approximate model 5 is a NN that is obtained by training the relationship between pieces of input/output data of a numerical simulation. By inputting input data 4a, such as a mesh of a structural object, to the approximate model 5, it is possible to obtain output data 4b in which the simulation result has been estimated.

Furthermore, there is the generalized minimal residual method (GMRES) as a type of an iterative method for obtaining a solution of a simultaneous linear equation, and, there is a related technology for speeding up iterative calculation by applying a deep neural network (DNN) to the GMRES. Hereinafter, simply referred to as a related technology.

With the related technology, regarding a simultaneous linear equation (Ax=b), training of the relationship between a right-hand side vector b and a solution vector x is performed on the DNN while performing a non-stationary analysis on a fluid by using the GMRES. In equation above, "A" denotes a matrix. Furthermore, in the related technology, by using the solution vector x that is output from the DNN trained up to that time and in which the training result is reflected, it is possible to reduce time needed for the iterative calculation.

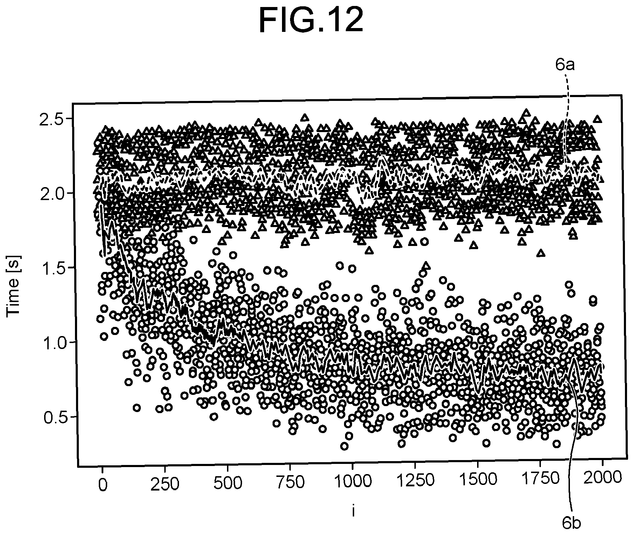

FIG. 12 is a diagram illustrating the related technology. The horizontal axis of the graph illustrated in FIG. 12 is the axis associated with time step (i) of a simulation related to the non-stationary analysis of the fluid performed by using the GMRES, whereas the vertical axis indicates time in each of the time step (time needed for the iterative calculation). In the non-stationary analysis, the entirety of the analysis is divided into short time and an operation of obtaining a phenomenon of next time is repeated while advancing time little by little, so that a plurality of time steps are included.

In FIG. 12, a triangle mark indicates time needed for each of the time steps in a case where the DNN is not used, and the average time is indicated by a line 6a. An open circle mark indicates time needed for each of the time steps in a case where the DNN is used, and the average time is indicated by a line 6b. As the time step advances, the training of the DNN advances, and thus, the solution vector x that is more suitable is output from the DNN, so that the time needed to perform the iterative calculation is gradually reduced. In other words, it is possible to speed up the iterative calculation by advancing the training of the DNN while performing the non-stationary analysis of the fluid by using the GMRES, and by using the output result of the DNN.

Patent Document 1: Japanese Laid-open Patent Publication No. 2007-157000

Patent Document 2: Japanese Laid-open Patent Publication No. 2008-226178

For example, it is conceivable to increase a scene in which the approximate model described above is able to be used by adopting a method for determining whether or not the accuracy of the inference result is sufficient or performing correction of the inference result.

Here, in order to examine the accuracy of the output obtained from the approximate model, it is conceivable to perform simulations under the same condition and compare the simulation result to the output result obtained from the approximate model. However, if a simulation is performed on each of the output results obtained from the approximate model, there is no point to speed up the iterative calculation performed by using the approximate model.

Furthermore, in general, the approximate model (NN) is an image in which the magnitude of the output is a fixed length; therefore, the magnitude of the output from the approximate model is not matched with the vector length of the solution vector x. As a result, it is not easy to correct the solution by using the output obtained from the approximate model or to improve the model based on the inference result.

Furthermore, the related technology that applies the DNN to the GMRES is limited to a case (non-stationary analysis) of repeatedly using a coefficient matrix A in which an applicable scope is the same; therefore, the related technology is not able to be applied to a steady analysis. In a non-stationary analysis, since a plurality of time steps are included, it is possible to advance the training of the DNN. In contrast, in the steady analysis, time steps are not included; therefore, it is not possible to perform training of the DNN by using the result of the time steps that are obtained up to the last time.

Accordingly, it is desirable to provide an inference program, an inference method, and an information processing apparatus capable of efficiently obtaining a solution with accuracy that satisfies a request received from a user.

SUMMARY

According to an embodiment of one aspect of the invention, an inference program causes a computer to execute a process including: inferring, by inputting new input data to an approximate model that is obtained by conducting practice by using training data in which a relationship between input data and output data of a numerical simulation is defined, output data that is associated with the new input data; determining whether or not accuracy of an inference result obtained from the approximate model satisfies a condition; correcting the inference result when the accuracy of the inference result obtained from the approximate model does not satisfy the condition; and outputting the corrected inference result.

BRIEF DESCRIPTION OF DRAWINGS

The invention is described, by way of example only, with reference to the following drawings:

FIG. 1 is a diagram illustrating an example of a GCN;
FIG. 2 is a diagram (1) illustrating a process performed by an information processing apparatus according to an embodiment;
FIG. 3 is a diagram (2) illustrating a process performed by the information processing apparatus according to an embodiment;
FIG. 4 is a functional block diagram illustrating a configuration of the information processing apparatus according to the embodiment;
FIG. 5 is a diagram illustrating an example of mesh data;
FIG. 6 is a diagram illustrating an example of a data structure of training purpose data;
FIG. 7 is a diagram illustrating an example of a data structure of an inference result table;
FIG. 8 is a flowchart illustrating the flow of a process of a training phase performed by the information processing apparatus according to the embodiment;
FIG. 9 is a flowchart illustrating the flow of a process of an inference phase performed by the information processing apparatus according to the embodiment;
FIG. 10 is a diagram illustrating an example of a hardware configuration of a computer that implements the same function as that of the information processing apparatus according to the embodiment;
FIG. 11 is a diagram illustrating an example of simulation result estimation obtained from an approximate model; and
FIG. 12 is a diagram illustrating a related technology.

DESCRIPTION OF EMBODIMENTS

Preferred embodiments will be explained with reference to accompanying drawings. Furthermore, the present invention is not limited to the embodiments.

Before the present embodiment is described, an example of a graph neural network (GNN) will be described. Here, as an example of the GNN, a description will be given by using a graph convolutional network (GCN).

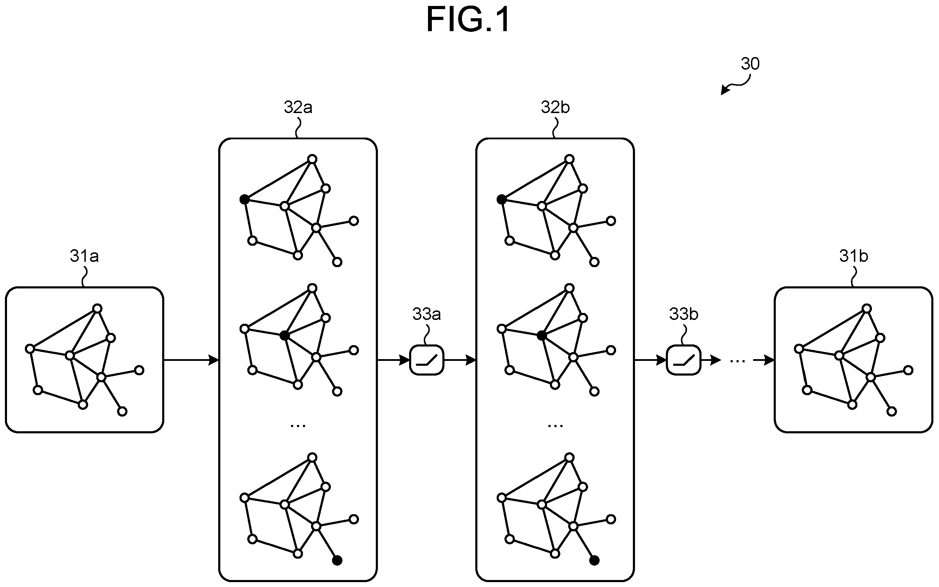

FIG. 1 is a diagram illustrating an example of a GCN. As illustrated in FIG. 1, a GCN 30 includes an input (Input) 31a, an output (Output) 31b, hidden layers (Hidden layer) 32a and 32b, and activating functions (rectified linear units: ReLUs) 33a and 33b.

The GCN 30 gives a feature value to each vertices included in a graph structure (a set of vertices and branches) as an input, and then, obtains, by using a NN, an output of each of the vertices based on the associated feature values of the (adjacent) vertices from which branches spread. It is assumed that a feature vector is given to each of the vertices, and following processes at Step S1 and Step S2 are performed on, for example, all of the layers.

The process performed on each of the layers included in the GCN 30 is performed by, regarding each of the vertices, aggregating (Aggregation) the feature vectors held by the adjacent vertices (Step S1), and calculating (Combine) an output of the own feature vector by combining the weights (Step S2).

In the GCN 30, training and an inference is possible with respect to an arbitrary number of vertices. The weight of the NN and inside the NN is common to all of the vertices (independent of the number of vertices); therefore, it is possible to infer the NN trained (practiced) by using pieces of data including an arbitrary number of vertices from pieces of data including arbitrary number of vertices.

The process performed on the layers included in the GCN 30 is able to be represented by Equation (1). In Equation (1), X denotes a feature matrix of $N \times F^0$, $H^i$ denotes a feature matrix of $N \times F^i$, A denotes an adjacent matrix of N×N, N denotes the number of vertices, and F° denotes a magnitude of a feature (vector).

$$H^i = f(H^{i-1}, A), H^0 = X \qquad\qquad (1)$$

In a case of the simplest GCN, the process performed on the layers included in the GCN 30 is also able to be represented by Equation (2). Here, Wi denotes a weighting matrix of $F^i \times F^{i+1}$, and σ denotes an activating function. The magnitude of the weighting matrix depends on a graph shape.

$$f(H^i, A) = \sigma(AH^iW^i) \qquad\qquad (2)$$

The information processing apparatus according to the present embodiment performs the process, which will be described later, by using the GNN (GCN) described above.

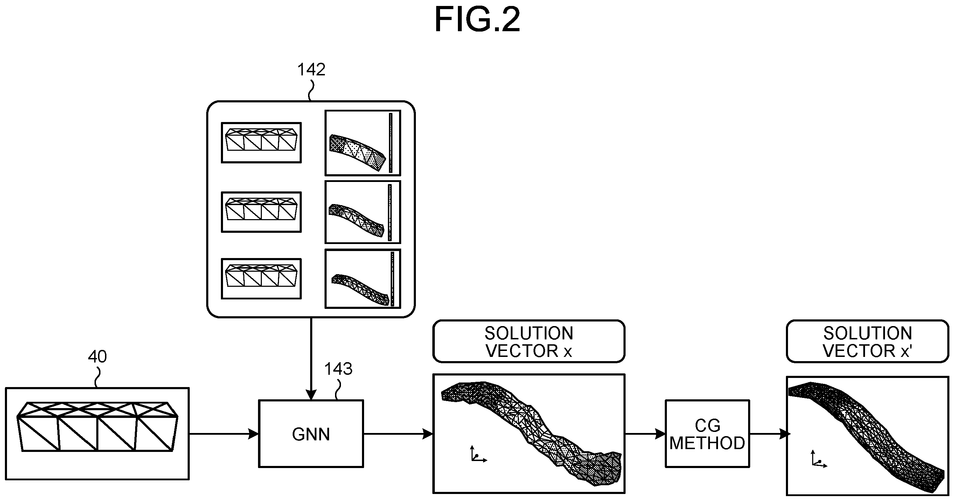

In the following, the information processing apparatus according to the present embodiment will be described. FIG. 2 is a diagram (1) illustrating a process performed by the information processing apparatus according to the present embodiment. As illustrated in FIG. 2, the information processing apparatus generates training purpose data 142 by performing a numerical simulation in advance, and trains (practices) a GNN 143.

The information processing apparatus inputs inference purpose data 40 that is related to a scheduled analysis to the trained GNN 143, and derives an inference of a solution vector x. In the inference purpose data 40, as will be described later, mesh data, a coefficient matrix A, and a right-hand side vector b are included. The information processing apparatus determines whether or not the accuracy of the solution vector x is sufficient by obtaining a residual error of the solution vector x. If the accuracy of the solution vector x is not sufficient, the information processing apparatus corrects the solution vector x by using a conjugate gradient (CG) method, and outputs a corrected solution vector x'. The CG method is an example of an iterative method.

As described above, the information processing apparatus determines whether or not the accuracy of a solution of the GNN 143 obtained in the case where the inference purpose data 40 is input is sufficient, and, if the accuracy is not sufficient, the information processing apparatus corrects the solution vector x by using the iterative method. As a result, it is possible to obtain a solution with accuracy that satisfies a request received from a user.

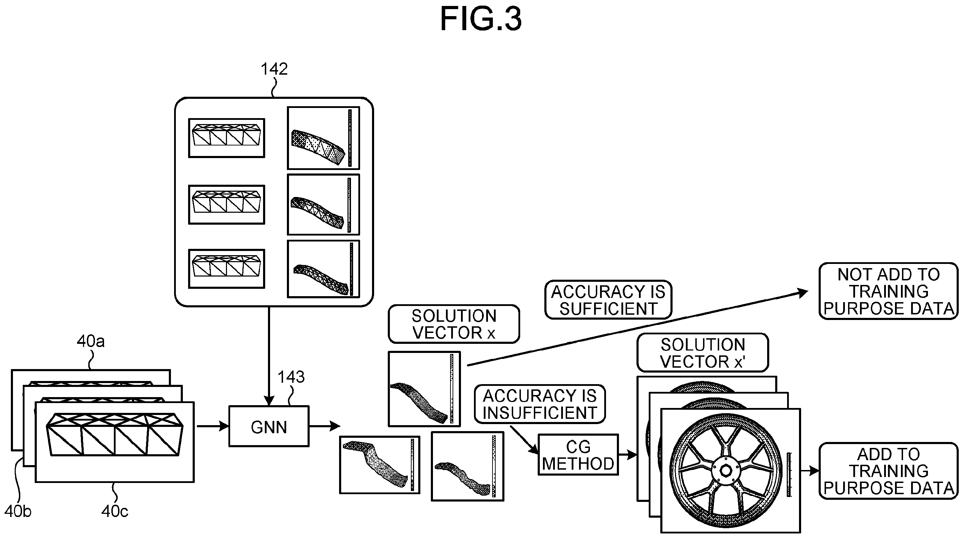

FIG. 3 is a diagram (2) illustrating a process performed by the information processing apparatus according to the present embodiment. The information processing apparatus generates the training purpose data 142 by performing, similarly to the case illustrated in FIG. 2, a numerical simulation in advance, and trains (drills) the GNN 143 in advance.

The information processing apparatus inputs a plurality of kinds of inference purpose data 40a, 40b, 40c to the trained GNN 143, and calculates a plurality of solution vectors x. The information processing apparatus determines, by obtaining a residual error of each of the solution vectors x, whether or not the accuracy of the solution vectors x is sufficient.

If the accuracy of the solution vectors x is not sufficient, the information processing apparatus corrects the solution vectors x by using the CG method, adds the corrected solution vector x' to the training purpose data, and uses the updated training purpose data in a case retraining the GNN 143. If the accuracy of the solution vectors x is sufficient, the information processing apparatus does not add the corrected solution vector x' to the training purpose data.

If the accuracy of the solution vectors x is insufficient, it can be said that training of the GNN 143 related to the solution vectors x is not sufficient. Thus, by adding a pair of inference purpose data that is associated with the solution vector x in which the accuracy is insufficient and the corrected solution vector x' to the training purpose data 142, it is possible to efficiently generate a case of the simulation that is useful to improve the GNN 143.

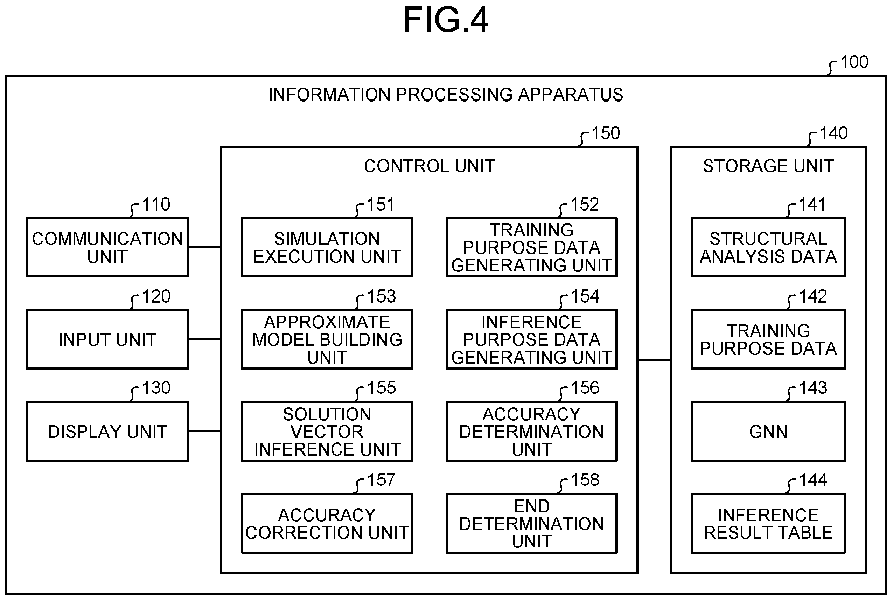

In the following, a configuration of the information processing apparatus according to the present embodiment that performs the processes described above with reference to FIG. 2 and FIG. 3 will be described. FIG. 4 is a functional block diagram illustrating the configuration of the information processing apparatus according to the present embodiment. As illustrated in FIG. 4, an information processing apparatus 100 includes a communication unit 110, an input unit 120, a display unit 130, a storage unit 140, and a control unit 150.

The communication unit 110 is connected to an external device or the like in a wired or wireless manner, and transmits and receives information to and from the external device or the like. For example, the communication unit 110 is implemented by a network interface card (NIC), or the like. The communication unit 110 may be connected to a network that is not illustrated.

The input unit 120 is an input device that inputs various kinds of information to the information processing apparatus 100. The input unit 120 corresponds to a keyboard, a mouse, a touch panel, or the like. The user operates the input unit 120 and designates, for example, a threshold that is related to a residual error or an error and that is requested in terms of the accuracy of a solution.

The display unit 130 is a display device that displays information that is output from the control unit 150. The display unit 130 corresponds to a liquid crystal display, an organic electro luminescence (EL) display, a touch panel, or the like. For example, a simulation result obtained from the GNN 143 is displayed on the display unit 130.

The storage unit 140 includes a structural analysis data 141, the training purpose data 142, the GNN 143, and an inference result table 144. The storage unit 140 is implemented by a semiconductor memory device, such as a random access memory (RAM) and a flash memory, or a storage device, such as a hard disk and an optical disk.

The structural analysis data 141 is data that is used for a simulation. In the present embodiment, the solution vector x of a simultaneous linear equation (Ax=b) is calculated by the simulation. For example, the solution vector x obtained by the simulation indicates a displacement of each of the points (elements) in the structure. In the structural analysis data 141, a set of the mesh data, a coefficient matrix A, and a right-hand side vector b is included.

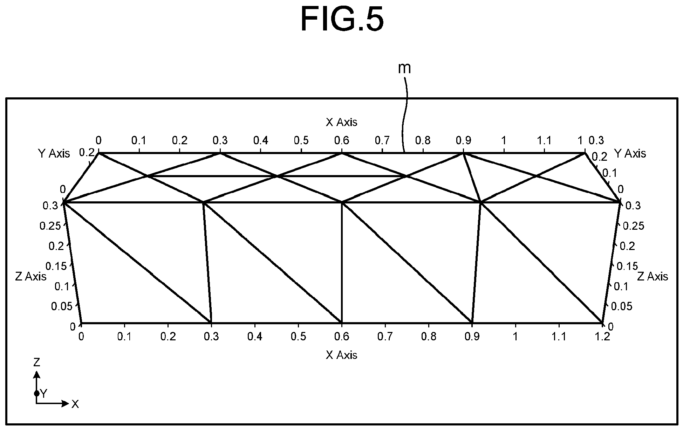

FIG. 5 is a diagram illustrating an example of the mesh data. Mesh data m is represented in the form of a mesh in which each of the points included in the structure is connected by lines. For example, each of the points in the mesh data m is associated with a plurality of elements i (i=1 to n). The coefficient matrix A and the right-hand side vector b are generated based on the mesh data m. In the coefficient matrix A, the strength of the connection relationship between the elements i,j (i=1 to n and j=1 to m) is set by a numerical value. A boundary condition is set to the right-hand side vector b. For example, if a predetermined force is applied to a certain element i, the force held by the element i is set as the boundary condition.

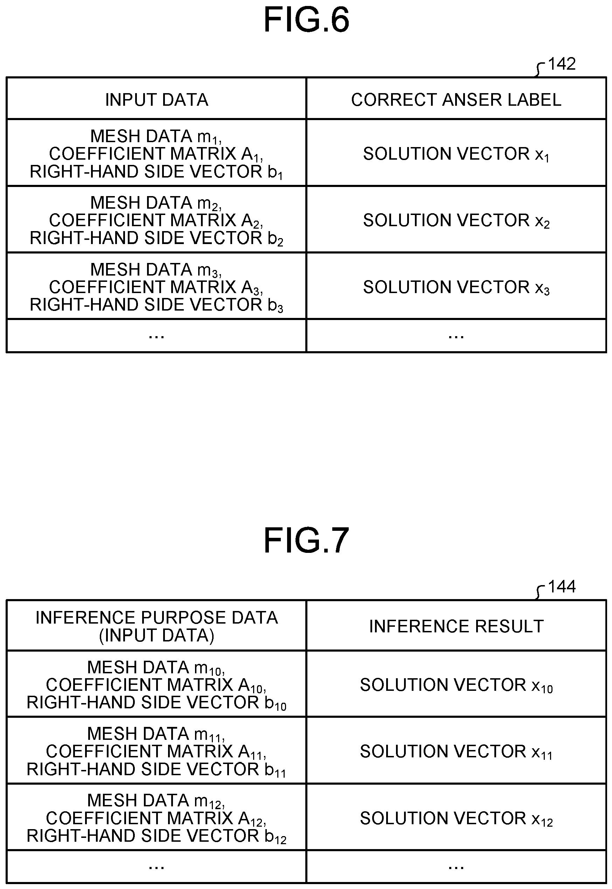

The training purpose data 142 is data for training (practicing) the GNN 143. FIG. 6 is a diagram illustrating an example of the data structure of the training purpose data. As illustrated in FIG. 6, the training purpose data 142 associates the input data with a correct answer label. In the input data, the mesh data m, the coefficient matrix A, and the right-hand side vector b are included. In the correct answer label, the solution vector x is included. The relationship between the input data and the correct answer label is specified by an execution result of a simulation.

The GNN 143 is an approximate model corresponding to the GNN (the GCN 30) described above with reference to FIG. 1, and is constituted from a plurality of layers. A parameter, such as weight, is set to the plurality of layers, and practice is conducted based on the training purpose data 142.

The inference result table 144 is a table that holds an inference result of the solution vectors x obtained from the GNN 143. FIG. 7 is a diagram illustrating an example of the data structure of the inference result table. As illustrated in FIG. 7, the inference result table 144 associates the inference purpose data with the inference result. In the inference purpose data, the mesh data m, the coefficient matrix A, and the right-hand side vector b that are used for inferences are included. The inference result corresponds to the solution vector x that is inferred by inputting the input data to the GNN 143.

A description will be given here by referring back to FIG. 4. The control unit 150 includes a simulation execution unit 151, a training purpose data generating unit 152, an approximate model building unit 153, an inference purpose data generating unit 154, a solution vector inference unit 155, an accuracy determination unit 156, an accuracy correction unit 157, and an end determination unit 158. The control unit 150 may be implemented by an integrated circuit, such as an application specific integrated circuit (ASIC), a field programmable gate array (FPGA), or the like.

The simulation execution unit 151 acquires the structural analysis data 141 from the training purpose data generating unit 152, and performs a simulation for calculating the solution vector x. By conducting a simulation under a plurality of conditions, the simulation execution unit 151 calculates a plurality of sets of the mesh data m, the coefficient matrix A, the right-hand side vector b, and the solution vector x. The simulation execution unit 151 outputs the execution result of the simulation to the training purpose data generating unit 152.

The training purpose data generating unit 152 is a processing unit that generates the training purpose data 142 by using the simulation execution unit 151. The training purpose data generating unit 152 outputs the structural analysis data 141 to the simulation execution unit 151 to conduct a simulation under a plurality of conditions, and obtains a simulation result. In the simulation result, a plurality of pairs of a set of mesh data m, the coefficient matrix A, and the right-hand side vector b, and the solution vector x are included. The training purpose data generating unit 152 registers, in the training purpose data 142, the mesh data m, the coefficient matrix A, and the right-hand side vector b as input data, and the solution vector x as the correct answer label.

If the training purpose data generating unit 152 acquires an instruction from the end determination unit 158, which will be described later, indicating that the training purpose data is to be added, the training purpose data generating unit 152 newly generates a pair of the input data and the correct answer label by changing the condition, and adds the generated pair to the training purpose data 142.

The approximate model building unit 153 performs training on the GNN 143 based on the training purpose data 142. For example, the approximate model building unit 153 repeatedly performs a process of adjusting the parameter of the GNN 143 such that the output data that is output from the GNN 143 approaches the correct answer label in the case where the approximate model building unit 153 acquires a pair of the input data and the correct answer label from the training purpose data 142 and inputs the input data to the GNN 143. The approximate model building unit 153 performs training on the GNN 143 by using an error backpropagation method or the like.

If the new input data and the correct answer label are registered in the training purpose data 142 by the accuracy correction unit 157, which will be described later and if the training purpose data 142 is updated, the approximate model building unit 153 performs retraining on the GNN 143 by using the updated training purpose data 142.

The inference purpose data generating unit 154 generates inference purpose data. For example, if the inference purpose data generating unit 154 receives data on the structure that corresponds to the analysis object from the input unit 120 or the like, the inference purpose data generating unit 154 generates the mesh data m in which the structure is represented in the form of a mesh. Furthermore, the inference purpose data generating unit 154 generates the coefficient matrix A and the right-hand side vector b based on the mesh data m. The inference purpose data generating unit 154 outputs the inference purpose data that includes the mesh data m, the coefficient matrix A, and the right-hand side vector b to the solution vector inference unit 155.

If the inference purpose data generating unit 154 receives an update of a step from the end determination unit 158, which will be described later, the inference purpose data generating unit 154 generates the inference purpose data by changing the condition, and repeatedly performs the process of outputting the generated data to the solution vector inference unit 155.

The solution vector inference unit 155 infers (calculates) the solution vector x by inputting the inference purpose data to the trained GNN 143. The solution vector inference unit 155 registers a relationship between the inference purpose data and the solution vector x that corresponds to the inference result into the inference result table 144. Furthermore, the solution vector inference unit 155 outputs the inference purpose data and the solution vector x to the accuracy determination unit 156.

The solution vector inference unit 155 repeatedly performs the process described above every time the solution vector inference unit 155 acquires the inference purpose data from the inference purpose data generating unit 154.

The accuracy determination unit 156 determines whether or not the accuracy of the solution vector x is sufficient. For example, the accuracy determination unit 156 determines, based on a residual error or an error, whether or not the accuracy of the solution vector x is sufficient.

A process of determining the accuracy based on the residual error and a process of determining the accuracy based on an error performed by the accuracy determination unit 156 will be described.

The process of determining the accuracy performed based on the residual error by the accuracy determination unit 156 will be described. The accuracy determination unit 156 calculates a residual error r based on Equation (3). In Equation (3), "A" corresponds to the coefficient matrix A included in the inference purpose data, and "b" corresponds to right-hand side vector b included in the inference purpose data. The value of the residual error r is closer to zero as the accuracy of the solution vector x is higher.

$$r=||Ax-b|| \qquad\qquad\qquad (3)$$

If the residual error r is less than a first threshold, the accuracy determination unit 156 determines that the accuracy of the solution vector x is sufficient. If the accuracy determination unit 156 determines that the accuracy of the solution vector x is not sufficient, the accuracy determination unit 156 outputs the inference purpose data and the solution vector x to the accuracy correction unit 157. The first threshold is previously designated by a user.

The process of determining the accuracy performed based on an error by the accuracy determination unit 156 will be described. The accuracy determination unit 156 calculates an error e based on Equation (4). The accuracy determination unit 156 calculates $x^{(1)}$ by performing the iterative method by one step by using the solution vector x as the initial value. The difference between the solution vector x and $x^{(1)}$ is decreased as the accuracy of the solution vector x is higher.

$$e=||x-x^{(1)}|| \qquad\qquad\qquad (4)$$

If the error e is less than a second threshold, the accuracy determination unit 156 determines that the accuracy of the solution vector x is sufficient. If the accuracy determination unit 156 determines that the accuracy of the solution vector x is not sufficient, the accuracy determination unit 156 outputs the inference purpose data and the solution vector x to the accuracy correction unit 157. The second threshold is previously designated by the user.

If the accuracy correction unit 157 acquires the solution vector x that is targeted for the correction from the accuracy determination unit 156, the accuracy correction unit 157 performs the iterative method (the CG method) for linear solvers, and corrects the solution vector x until the residual error r is less than the first threshold. The accuracy correction unit 157 associates the inference purpose data with the corrected solution vector x' and registers the associated data into the inference result table 144.

The accuracy correction unit 157 associates the inference purpose data with the corrected solution vector x' and registers the associated data into the training purpose data 142. The inference purpose data corresponds to the input data and the corrected solution vector x' corresponds to the correct answer label.

The end determination unit 158 is a processing unit that determines whether or not the simulation has ended. The end determination unit 158 determines to end the simulation when a predetermined end condition is satisfied. The end determination unit 158 outputs an update of the step to the inference purpose data generating unit 154 in a period of time for which the simulation is continued. Furthermore, the end determination unit 158 may output an instruction to the training purpose data generating unit 152 indicating that the training purpose data is added.

The end determination unit 158 may output the information on the inference result table 144 to the display unit 130 and cause the display unit 130 to display the output information, or the end determination unit 158 may notify an external device of the information on the inference result table 144 via a network.

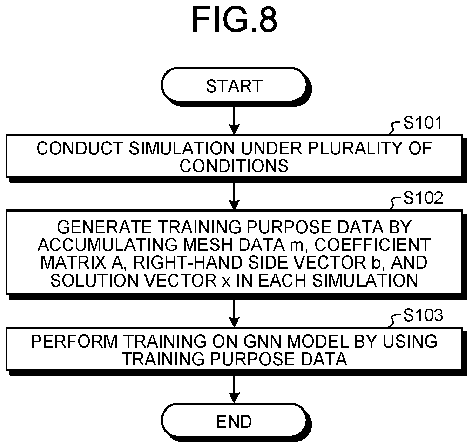

In the following, an example of the flow of the process performed by the information processing apparatus according to the present embodiment will be described. FIG. 8 is a flowchart illustrating the flow of the process of a training phase performed by the information processing apparatus according to the present embodiment. As illustrated in FIG. 8, the simulation execution unit 151 included in the information processing apparatus 100 conducts a simulation under the plurality of conditions (Step S101).

The training purpose data generating unit 152 included in the information processing apparatus 100 accumulates the mesh data m, the coefficient matrix A, the right-hand side vector b, the solution vector x of each of the simulations and generates the training purpose data 142 (Step S102).

The approximate model building unit 153 included in the information processing apparatus 100 performs training on the GNN 143 by using the training purpose data 142 (Step S103).

Furthermore, the process illustrated in FIG. 8 is performed again when new data is added to the training purpose data 142.

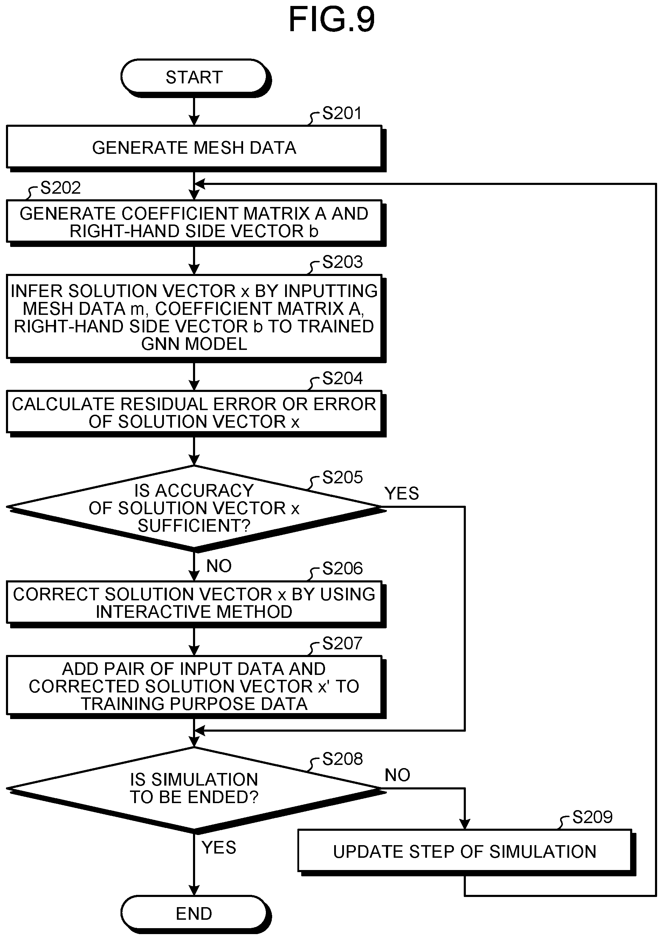

FIG. 9 is a flowchart illustrating the flow of the process of an inference phase performed by the information processing apparatus according to the present embodiment. As illustrated in FIG. 9, the inference purpose data generating unit 154 included in the information processing apparatus 100 generates the mesh data m (Step S201). The inference purpose data generating unit 154 generates the coefficient matrix A and the right-hand side vector b (Step S202).

The solution vector inference unit 155 included in the information processing apparatus 100 inputs the mesh data m, the coefficient matrix A, and the right-hand side vector b to the trained GNN 143, and then, infers the solution vector x (Step S203).

The accuracy determination unit 156 included in the information processing apparatus 100 calculates the residual error of the solution vector x or the error (Step S204). The accuracy determination unit 156 determines whether or not the accuracy of the solution vector x is sufficient based on the obtained residual error or the error (Step S205). For example, in a case of using the residual error at Step S205, if the residual error is less than the first threshold, it is determined that the accuracy of the solution vector x is sufficient. Furthermore, in a case of using the error, if the error is less than the second threshold, it is determined that the accuracy of the solution vector x is sufficient.

If the accuracy of the solution vector x is sufficient (Yes at Step S205), the accuracy determination unit 156 proceeds to Step S208.

In contrast, if the accuracy of the solution vector x is not sufficient (No at Step S205), the accuracy determination unit 156 proceeds to Step S206. The accuracy correction unit 157 included in the information processing apparatus 100 corrects the solution vector x by using the iterative method (Step S206).

The accuracy determination unit 156 adds the pair of the input data and the corrected solution vector x' to the training purpose data 142 (Step S207).

If the end determination unit 158 included in the information processing apparatus 100 ends the simulation (Yes at Step S208), the end determination unit 158 ends the process. In contrast, if the end determination unit 158 does not end the simulation (No at Step S208), the end determination unit 158 updates the step of the simulation (Step S209), and proceeds to Step S202.

In the following, effects of the information processing apparatus 100 according to the present embodiment will be described. The information processing apparatus 100 determines whether or not the accuracy of the solution of the GNN 143 obtained in the case where the inference purpose data is input is sufficient, and corrects, if the accuracy if not sufficient, the solution vector x by using the iterative method. As a result, it is possible to efficiently obtain the solution with accuracy that satisfies the request received from the user.

If the accuracy of the solution vector x is not sufficient, the information processing apparatus 100 corrects the solution vector x by using the iterative method, adds the corrected solution vector x' to the training purpose data 142, and uses the updated training purpose data 142 at the time of retraining the GNN 143. As a result, it is possible to efficiently generate a case of the simulation that is useful to improve the GNN 143.

The information processing apparatus 100 calculates the residual error of the solution vector x or the error, and determines whether or not the accuracy of the solution vector x is sufficient based on the calculated residual error or the error. As a result, it is possible to appropriately determine whether or not the accuracy of the solution vector x is sufficient.

Incidentally, in the embodiment described above, a case has been described in which the information processing apparatus 100 calculates the solution vector x of the simultaneous linear equation; however, the embodiment is not limited to this. For example, based on a Newton-Raphson method, by solving a simultaneous linear equation by a plurality of steps, it is possible to conduct a nonlinear analysis (elastic mechanics).

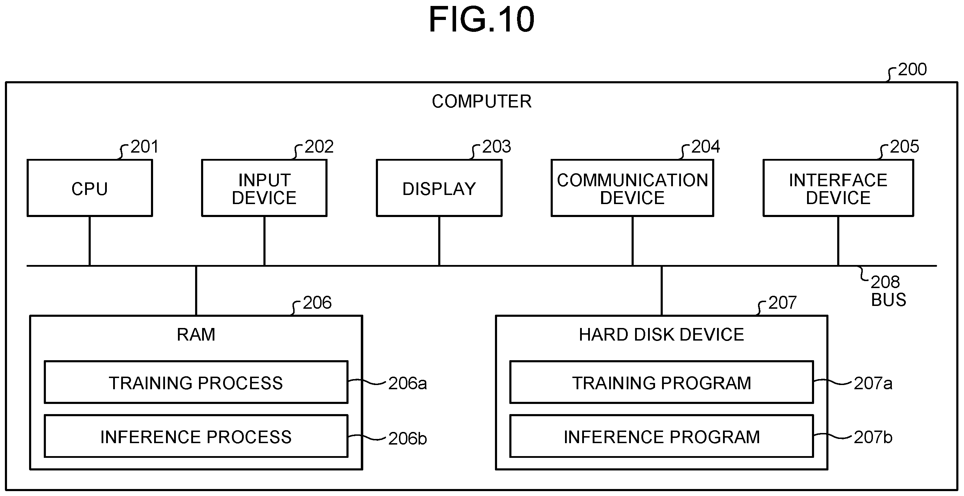

In the following, an example of a hardware configuration of a computer that implements the same function as that of the information processing apparatus 100 according to the embodiment described above will be described. FIG. 10 is a diagram illustrating an example of a hardware configuration of the computer that implements the same function as that of the information processing apparatus according to the embodiment.

As illustrated in FIG. 10, a computer 200 includes a CPU 201 that performs various kinds of arithmetic processing, an input device 202 that receives an input of data from a user, and a display 203. Furthermore, the computer 200 includes a communication device 204 that transmits and receives data to and from an external device or the like via a wired or wireless network, and an interface device 205. Furthermore, the computer 200 includes a RAM 206 that temporarily stores therein various kinds of information, and a hard disk device 207. In addition, each of the devices 201 to 207 is connected to a bus 208.

The hard disk device 207 includes a training program 207a and an inference program 207b. Furthermore, the CPU 201 reads each of the programs 207a and 207b and loads the programs 207a and 207b into the RAM 206.

The training program 207a functions as a training process 206a. The inference program 207b functions as an inference process 206b.

The process of the training process 206a corresponds to each of the processes performed by the simulation execution unit 151, the training purpose data generating unit 152, and the approximate model building unit 153. The process of the inference process 206b corresponds to each of the processes performed by the inference purpose data generating unit 154, the solution vector inference unit 155, the accuracy determination unit 156, the accuracy correction unit 157, and the end determination unit 158.

Furthermore, each of the programs 207a and 207b does not need to be stored in the hard disk device 207 from the beginning. For example, each of the programs is stored in a "portable physical medium", such as a flexible disk (FD), a CD-ROM, a DVD disk, a magneto-optic disk, an IC card, that is to be inserted into the computer 200. Then, the computer 200 may also read each of the programs 207a and 207b from the portable physical medium and execute the programs.

It is possible to efficiently obtain a solution with accuracy that satisfies a request received from a user.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. An inference program (207b) that causes a computer (200) to execute a process comprising:

   inferring, by inputting new input data to an approximate model that is obtained by conducting practice by using training data in which a relationship between input data and output data of a numerical simulation is defined, output data that is associated with the new input data;
   determining whether or not accuracy of an inference result obtained from the approximate model satisfies a condition;
   correcting the inference result when the accuracy of the inference result obtained from the approximate model does not satisfy the condition; and
   outputting the corrected inference result.

2. The inference program (207b) according to claim 1, wherein the correcting includes correcting a solution vector corresponding to the inference result by performing an iterative method.

3. The inference program (207b) according to claim 1 or 2, wherein the determining includes determining, based on a residual error that is obtained from a solution vector corresponding to the inference result obtained from the approximate model, whether or not the accuracy of the inference result obtained from the approximate model satisfies the condition.

4. The inference program (207b) according to any of claims 1 to 3, wherein the determining includes determining, based on an error between a result obtained by performing an iterative method by one step by using, as an initial value, a solution vector corresponding to the inference result obtained from the approximate model and the initial value, whether or not the accuracy of the inference result obtained from the approximate model satisfies the condition.

5. The inference program (207b) according to any of claims 1 to 4, wherein the process further includes performing retraining on the approximate model by using an inference result in which the accuracy does not satisfy the condition.

6. An inference method that causes a computer (200) to execute a process comprising:

inferring, by inputting new input data to an approximate model that is obtained by conducting practice by using training data in which a relationship between input data and output data of a numerical simulation is defined, output data that is associated with the new input data;
determining whether or not accuracy of an inference result obtained from the approximate model satisfies a condition;
correcting the inference result when the accuracy of the inference result obtained from the approximate model does not satisfy the condition; and
outputting the corrected inference result.

7. The inference method according to claim 6, wherein the correcting includes correcting a solution vector corresponding to the inference result by performing an iterative method.

8. The inference method according to claim 6 or 7, wherein the determining includes determining, based on a residual error that is obtained from a solution vector corresponding to the inference result obtained from the approximate model, whether or not the accuracy of the inference result obtained from the approximate model satisfies the condition.

9. The inference method according to any of claims 6 to 8, wherein the determining includes determining, based on an error between a result obtained by performing an iterative method by one step by using, as an initial value, a solution vector corresponding to the inference result obtained from the approximate model and the initial value, whether or not the accuracy of the inference result obtained from the approximate model satisfies the condition.

10. The inference method according to any of claims 6 to 9, further including performing retraining on the approximate model by using an inference result in which the accuracy does not satisfy the condition.

11. An information processing apparatus (100) comprising:

a solution vector inference unit (155) configured to infer, by inputting new input data to an approximate model that is obtained by conducting practice by using training data in which a relationship between input data and output data of a numerical simulation is defined, output data that is associated with the new input data;
an accuracy determination unit (156) configured to determine whether or not accuracy of an inference result obtained from the approximate model satisfies a condition; and
an accuracy correction unit (157) configured to correct the inference result when the accuracy of the inference result obtained from the approximate model does not satisfy the condition and output the corrected inference result.

12. The information processing apparatus according to claim 11, wherein the accuracy correction unit (157) is configured to correct a solution vector corresponding to the inference result by performing an iterative method.

13. The information processing apparatus according to claim 11 or 12, wherein the accuracy determination unit (156) is configured to determine, based on a residual error that is obtained from a solution vector corresponding to the inference result obtained from the approximate model, whether or not the accuracy of the inference result obtained from the approximate model satisfies the condition.

14. The information processing apparatus according to any of claims 11 to 13, wherein the accuracy determination unit (156) is configured to determine, based on an error between a result obtained by performing an iterative method by one step by using, as an initial value, a solution vector corresponding to the inference result obtained from the approximate model and the initial value, whether or not the accuracy of the inference result obtained from the approximate model satisfies the condition.

15. The information processing apparatus according to any of claims 11 to 14, further including an approximate model building unit (153) configured to perform retraining on the approximate model by using an inference result in which the accuracy does not satisfy the condition.

FIG.1

EP 4 109 351 A1

# FIG.2

# FIG.3

EP 4 109 351 A1

# FIG.4

EP 4 109 351 A1

**INFORMATION PROCESSING APPARATUS** ⌐100

**CONTROL UNIT** ⌐150

**STORAGE UNIT** ⌐140

⌐110
COMMUNICATION UNIT

⌐120
INPUT UNIT

⌐130
DISPLAY UNIT

⌐151
SIMULATION EXECUTION UNIT

⌐152
TRAINING PURPOSE DATA GENERATING UNIT

⌐153
APPROXIMATE MODEL BUILDING UNIT

⌐154
INFERENCE PURPOSE DATA GENERATING UNIT

⌐155
SOLUTION VECTOR INFERENCE UNIT

⌐156
ACCURACY DETERMINATION UNIT

⌐157
ACCURACY CORRECTION UNIT

⌐158
END DETERMINATION UNIT

⌐141
STRUCTURAL ANALYSIS DATA

⌐142
TRAINING PURPOSE DATA

⌐143
GNN

⌐144
INFERENCE RESULT TABLE

# FIG.5

# FIG.6

142

| INPUT DATA | CORRECT ANSER LABEL |
|---|---|
| MESH DATA $m_1$, COEFFICIENT MATRIX $A_1$, RIGHT-HAND SIDE VECTOR $b_1$ | SOLUTION VECTOR $x_1$ |
| MESH DATA $m_2$, COEFFICIENT MATRIX $A_2$, RIGHT-HAND SIDE VECTOR $b_2$ | SOLUTION VECTOR $x_2$ |
| MESH DATA $m_3$, COEFFICIENT MATRIX $A_3$, RIGHT-HAND SIDE VECTOR $b_3$ | SOLUTION VECTOR $x_3$ |
| ... | ... |

# FIG.7

144

| INFERENCE PURPOSE DATA (INPUT DATA) | INFERENCE RESULT |
|---|---|
| MESH DATA $m_{10}$, COEFFICIENT MATRIX $A_{10}$, RIGHT-HAND SIDE VECTOR $b_{10}$ | SOLUTION VECTOR $x_{10}$ |
| MESH DATA $m_{11}$, COEFFICIENT MATRIX $A_{11}$, RIGHT-HAND SIDE VECTOR $b_{11}$ | SOLUTION VECTOR $x_{11}$ |
| MESH DATA $m_{12}$, COEFFICIENT MATRIX $A_{12}$, RIGHT-HAND SIDE VECTOR $b_{12}$ | SOLUTION VECTOR $x_{12}$ |
| ... | ... |

# FIG.8

START

CONDUCT SIMULATION UNDER PLURALITY OF CONDITIONS ⌐S101

GENERATE TRAINING PURPOSE DATA BY ACCUMULATING MESH DATA m, COEFFICIENT MATRIX A, RIGHT-HAND SIDE VECTOR b, AND SOLUTION VECTOR x IN EACH SIMULATION ⌐S102

PERFORM TRAINING ON GNN MODEL BY USING TRAINING PURPOSE DATA ⌐S103

END

# FIG.9

START

S201
GENERATE MESH DATA

S202
GENERATE COEFFICIENT MATRIX A AND
RIGHT-HAND SIDE VECTOR b

S203
INFER SOLUTION VECTOR x BY INPUTTING
MESH DATA m, COEFFICIENT MATRIX A,
RIGHT-HAND SIDE VECTOR b TO TRAINED
GNN MODEL

S204
CALCULATE RESIDUAL ERROR OR ERROR
OF SOLUTION VECTOR x

S205
IS ACCURACY
OF SOLUTION VECTOR x
SUFFICIENT? — YES

NO

S206
CORRECT SOLUTION VECTOR x BY USING
INTERACTIVE METHOD

S207
ADD PAIR OF INPUT DATA AND
CORRECTED SOLUTION VECTOR x' TO
TRAINING PURPOSE DATA

S208
IS SIMULATION
TO BE ENDED? — NO

YES

S209
UPDATE STEP OF SIMULATION

END

# FIG.10

EP 4 109 351 A1

COMPUTER ~200

| | | | | |
|---|---|---|---|---|
| CPU ~201 | INPUT DEVICE ~202 | DISPLAY ~203 | COMMUNICATION DEVICE ~204 | INTERFACE DEVICE ~205 |

~208
BUS

RAM ~206

TRAINING PROCESS ~206a

INFERENCE PROCESS ~206b

HARD DISK DEVICE ~207

TRAINING PROGRAM ~207a

INFERENCE PROGRAM ~207b

# FIG.11

EP 4 109 351 A1

# FIG.12

Europäisches
Patentamt

European
Patent Office

Office européen
des brevets

# EUROPEAN SEARCH REPORT

Application Number

EP 22 16 1742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/227383 A1 (ASPEN TECH INC [US]) 12 November 2020 (2020-11-12) * paragraphs [0004] - [0017], [0038] - [0104]; figures 1-15C * | 1-15 | INV. G06N3/08 G06N3/04 G06F30/23 G06F30/27 |
| A | US 2019/102694 A1 (YATES ANDREW DONALD [US] ET AL) 4 April 2019 (2019-04-04) * paragraphs [0003] - [0005], [0015] - [0068]; figures 1-5 * | 1-15 | |

TECHNICAL FIELDS
SEARCHED       (IPC)

G06N
G06F

The present search report has been drawn up for all claims

| Place of search | Date of completion of the search | Examiner |
|---|---|---|
| The Hague | 29 August 2022 | Freitas, Arthur |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 1742

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2022

| Patent document cited in search report | | Publication date | Patent family member(s) | | Publication date |
|---|---|---|---|---|---|
| WO 2020227383 | A1 | 12-11-2020 | EP | 3966641 A1 | 16-03-2022 |
| | | | JP | 2022532143 A | 13-07-2022 |
| | | | US | 2020379442 A1 | 03-12-2020 |
| | | | WO | 2020227383 A1 | 12-11-2020 |
| US 2019102694 | A1 | 04-04-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007157000 A
- JP 2008226178 A